# EUROPEAN PATENT SPECIFICATION

(11) **EP 2 826 979 B1**
(45) Date of publication and mention of the grant of the patent: **27.09.2017**
(21) Application number: 14176573.5
(22) Date of filing: 10.07.2014
(51) Int. Cl.: F02C 3/30, F02C 9/48

(54) **Gas turbine emissions control system and method**
Regelung der Abgasemission einer Gasturbinenanlage sowie Verfahren
Système et procédé de réglage d'émissions de turbine à gaz

(30) Priority: 18.07.2013 US 201313945793
(43) Date of publication of application: 21.01.2015
(73) Proprietor: General Electric Company, Schenectady, NY 12345 (US)
(72) Inventor: Pandey, Achalesh Kumar, Greenville, SC 29615 (US); Healy, Timothy Andrew, Greenville, SC 29615 (US)
(74) Representative: Illingworth-Law, William Illingworth

(56) References cited:
- EP-A2- 2 535 643
- GB-A- 2 132 112
- US-A1- 2011 192 147
- US-A1- 2012 096 835

## Description

The subject matter disclosed herein relates to turbine systems and, more specifically, to systems and methods for regulating emissions produced by such turbine systems.

Gas turbine systems typically include at least one gas turbine engine having a compressor, a combustor, and a turbine. The combustor is configured to combust a mixture of fuel and compressed air to generate hot combustion gases, which, in turn, drive blades of the turbine. Exhaust gas produced by the gas turbine engine may include certain byproducts, such as nitrogen oxides (NOₓ), sulfur oxides (SOₓ), carbon oxides (COₓ), and unburned hydrocarbons. In general, it is desirable to eliminate or substantially reduce the amount of such byproducts in the exhaust gas prior to releasing the exhaust gas into the atmosphere.

US 2012/096835 describes a system for treating an exhaust flow including NOx in a turbine engine power generation plant including a selective catalytic reduction system having a catalyst. During steady state operation of the engine, a reducing agent, such as ammonia, is supplied to an injector in an amount based on a measured molar flow of NOx in the exhaust flow. During a disturbance in the operation of the turbine engine, a reducing agent is supplied to the injector in an amount based on a predicted molar flow of NOx in the exhaust flow. In addition, the system can include a biasing feature in which additional reducing agent is supplied to the exhaust flow beyond the predicted molar flow of NOx. The system and method can mitigate NOx during transient engine operation, an operational mode in which emissions are difficult to predict and control.

US 2011/192147 relates to methods and systems for controlling ammonia slip, and in particular, for controlling ammonia slip downstream of a selective catalyst reduction (SCR) system.

GB 2132112 describes a system employing a catalyst to react injected ammonia with NOx from the combustor of a gas turbine to reduce atmospheric emission of NOx from the system. Rapid control of ammonia injection is achieved using a prediction of the NOx being generated in dependence upon the operating conditions of the combustor. The amount of NOx downstream of catalyst is measured and compared to a preset NOx value to generate an error signal which is used to control NH3 injection to adjust the measured NOx toward the setpoint. The NOx predictor generates a signal based on e.g. pressure, temperature, fuel-and air-flow of gas turbine which signal is fed to NH3 control along with the actual NOx signal and the NOx setpoint.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

The present invention resides in a system, according to claim 1, and in a method, according to claim 3, for operating a turbine system as defined in the appended claims.

These and other features, aspects, and advantages of the present invention will become better understood when the following detailed description is read with reference to the accompanying drawings in which like characters represent like parts throughout the drawings, wherein:
FIG. 1 is a block diagram of a turbine system that includes a system for controlling emissions of the turbine system, in accordance with embodiments of the present disclosure;
FIG. 2 is a flow chart of a method for controlling emissions of the turbine system of FIG. 1; and
FIG. 3 is a flow chart of a method for controlling emissions of the turbine system of FIG. 1.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present invention generally relate to techniques for controlling emissions of a gas turbine system. For instance, in gas turbine systems, one or more gas turbine engines may combust a fuel to produce combustion gases for driving one or more turbine stages, each having a plurality of blades. Depending on the type of fuel that is combusted, exhaust emissions resulting from the combustion process may include nitrogen oxides (NOₓ), sulfur oxides (SOₓ), carbon oxides (COₓ), and unburned hydrocarbons. Often, the composition of exhaust gases released by gas turbine systems, such as a gas turbine power generation plant, is subject to stringent regulatory requirements. By way of example only, regulations may require that the NOₓ composition of the exhaust gas that is released into the atmosphere is no greater than a threshold level, such as 3 parts-per-million (ppm).

One technique for removing or reducing the amount of NOₓ in an exhaust gas stream is by Selective Catalytic Reduction (SCR). In an SCR process, a reductant, such as ammonia (NH₃) is injected into the exhaust gas stream and reacts with the NOₓ to produce nitrogen (N₂) and water (H₂O). The effectiveness of the SCR process may be at least partially dependent upon the amount of reductant injected into the exhaust gas stream. However, when reductant is over-injected into the exhaust gas stream, the excess reductant may not react with NOₓ. As a result, an amount of reductant may "slip" or pass through the SCR process unreacted.

Another technique for removing or reducing the amount of NOₓ (or other emissions compound) in an exhaust gas stream is by regulating operation of the gas turbine system. For example, fuel system operation (e.g., adjustment to fuel-air ratio, fuel splits, etc.) may be regulated to maintain low flame temperatures within the combustor of the gas turbine system and thereby reduce NOₓ emission levels. For further example, injecting water or steam into a combustor of the gas turbine system may reduce NOₓ emission levels. However, water or steam injection can increase combustion dynamics (e.g., acoustic and/or pressure oscillations) within the turbine system. As a result, it may be desirable to monitor and/or regulate the amount of water or steam injected into the combustor of the turbine system.

As such, in accordance with embodiments of the present invention, a turbine system, such as a simple cycle heavy-duty gas turbine system or an aircraft engine derivative combustion system, may include a control system configured to regulate and coordinate various emissions control techniques of a gas turbine system (e.g., fuel/air ratio, flame temperature, steam injection, water injection, fuel composition, etc.) and a selective catalytic reduction system (e.g., in an exhaust section) to achieve a desired quality of emissions (e.g., stack emissions) produced by the turbine system. For instance, as will be described further below, the control system may be configured to utilize available NOₓ reduction capacity of the SCR system to reduce NOₓ emission levels, while enabling reduced usage of emissions control measures in the gas turbine system. In this manner, fuel system operation may be adjusted (e.g., fuel/air ratio may be increased or decreased), steam or water injection may be reduced, or other operating parameters of the gas turbine system may be adjusted or improved to reduce combustion dynamics (e.g., acoustic and/or pressure oscillations) and thereby reduce mechanical and thermal fatigue to combustor and/or turbine hardware. Additionally, performance, power output, and efficiency of the turbine system may be improved.

In one embodiment, variations in the amount of NOₓ produced by the gas turbine of the gas turbine system (e.g., variations in the amount of NOₓ in the exhaust gases sent to the SCR system) may be preset or scheduled. For example, gas turbine NOₓ emissions may be scheduled as a function of gas turbine load. As such, a controller of the SCR system may be configured to inject an appropriate amount of reductant (e.g., based on the amount of NOₓ in the exhaust gases produced by the gas turbine) into the SCR system to maintain emissions levels (e.g., NOₓ levels) below a threshold level in the gas turbine system emissions (e.g., stack emissions). In another embodiment, the amount of reductant "slip" in the SCR system (e.g., amount of unreacted reductant) and the amount of NOₓ in the gas turbine system emissions (e.g., stack emissions) may be simultaneously controlled to decrease emissions control measures in the gas turbine engine causing an increase of NOₓ in the exhaust gases entering the SCR system, while still maintaining emissions levels (e.g., stack NOₓ levels) below a desired or threshold level in the SCR system. To this end, one or more gas turbine (e.g., combustion) operating parameters may be adjusted to reduce emissions control measures in the combustors, which may reduce the amount of combustion dynamics produced during gas turbine operation and/or improve power output, performance, efficiency, etc. of the turbine system, as discussed below. While the embodiments discussed below are described in a NOₓ reduction context, it will be appreciated that the disclosed techniques may be utilized with the reduction of other emissions compounds (e.g., CO) as well. Additionally, in certain embodiments, a level of a first emissions compound (e.g., NOₓ) may be increased, thereby causing a decrease in a level of a second emissions compound (e.g., CO). For example, in the manner described below, as NOₓ emissions levels are increased in the gas turbine engine, CO levels may be decreased in the gas turbine engine.

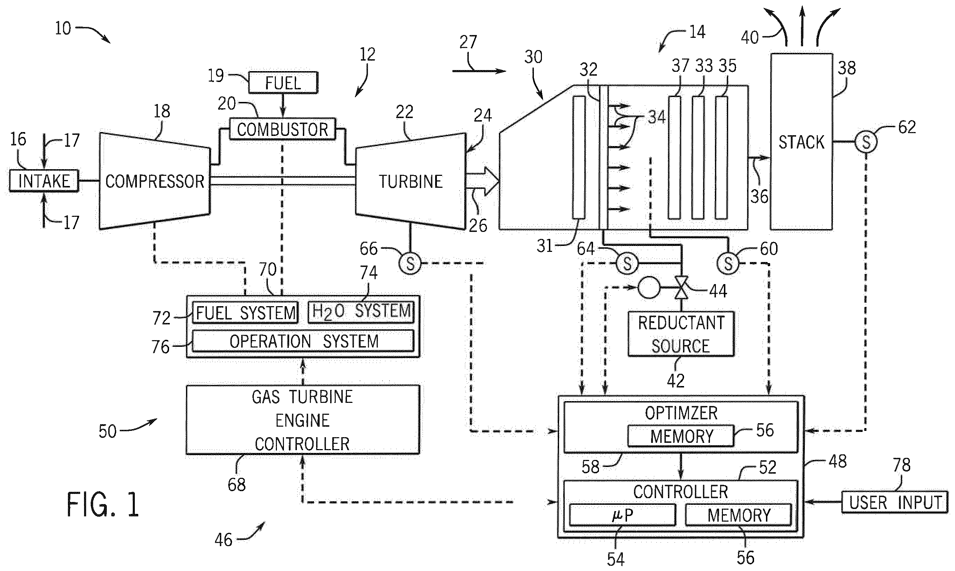

With the foregoing in mind, FIG. 1 is a block diagram of an exemplary turbine system 10 that includes a gas turbine engine 12 and an exhaust processing system 14. In certain embodiments, the turbine system 10 may be a power generation system. The turbine system 10 may combust liquid or gas fuel, such as natural gas and/or a hydrogen-rich synthetic gas, to generate hot combustion gases to drive the turbine system 10.

As shown, the gas turbine engine 12 includes an air intake section 16, a compressor 18, a combustor section 20, and a turbine 22. The turbine 20 may be drivingly coupled to the compressor 18 via a shaft. In operation, air enters the turbine engine 12 through the air intake section 16 (indicated by the arrows 17) and is pressurized in the compressor 18. The compressor 18 may include a plurality of compressor blades coupled to the shaft. The rotation of the shaft causes rotation of the compressor blades, thereby drawing air into the compressor 18 and compressing the air prior to entry into the combustor section 20.

The combustor section 20 may include one or more combustors. In one embodiment, a plurality of combustors may be disposed at multiple circumferential positions in a generally circular or annular configuration about the shaft. As compressed air exits the compressor 18 and enters the combustor section 20, the compressed air may be mixed with fuel 19 for combustion within the combustor(s). For example, the combustor(s) may include one or more fuel nozzles that inject a fuel-air mixture into the combustor(s) in a suitable ratio for combustion, emissions control, fuel consumption, power output, and so forth. The combustion of the air and fuel generates hot pressurized exhaust gases, which may then be utilized to drive one or more turbine stages (each having a plurality of turbine blades) within the turbine 22. In operation, the combustion gases flowing into and through the turbine 22 flow against and between the turbine blades, thereby driving the turbine blades and, thus, the shaft into rotation to drive a load, such as an electrical generator in a power plant. As discussed above, the rotation of the shaft also causes blades within the compressor 18 to draw in and pressurize the air received by the intake 16.

The combustion gases that flow through the turbine 22 may exit the downstream end 24 of the turbine 22 as a stream of exhaust gas 26. The exhaust gas stream 26 may continue to flow in the downstream direction 27 towards the exhaust processing system 14. The exhaust processing system 14 may include a high pressure (HP) air-to-steam heat exchanger 31, an intermediate pressure (IP) air-to-steam heat exchanger 33, and a low pressure (LP) air-to-steam heat exchanger 35 for transferring thermal energy from the exhaust gas 26 to other systems (e.g., steam turbines). Other embodiments may include some or none of the heat exchangers 31, 33, and 35. The downstream end 24 of the turbine 22 may be fluidly coupled to an SCR system 30 of the exhaust processing system 14. As discussed above, as a result of the combustion process, the exhaust gas 26 may include certain byproducts, such as nitrogen oxides (NOₓ), sulfur oxides (SOₓ), carbon oxides (COₓ), and unburned hydrocarbons. Due to certain regulatory requirements, the exhaust processing system 14 may be employed to reduce or substantially minimize the concentration of such byproducts prior to releasing the exhaust gas stream into the atmosphere. As will be appreciated, the SCR system 30 may be designed or sized based upon a maximum demand of NOₓ reduction in an application. As a result, when the gas turbine engine 12 is not operating at full or base load and the gas turbine engine 12 is not producing maximum NOₓ levels or a maximum flow of exhaust gas 26, the SCR system 30 may have additional (e.g., unused) capacity for NOₓ reduction. In the manner described below, at less than full gas turbine engine 12 loads, the additional or unused NOₓ reduction capacity of the SCR system 30 may be utilized to improve combustor 24 operation and life by reducing the usage of other emissions control measures in the combustors. Additionally, in certain embodiments, the SCR system 30 may be over-designed to provide additional NOₓ reduction capacity. As such, the gas turbine engine 12 may be operated at a full load, and the unused capacity of the SCR system 30 may be utilized to further reduce NOₓ levels in the exhaust gas stream 26.

As mentioned above, one technique for removing or reducing the amount of NOₓ in an exhaust gas stream is by using a Selective Catalytic Reduction (SCR) process. For example, in an SCR process for removing NOₓ from the exhaust gas stream 26, ammonia (NH₃) is injected into the exhaust gas stream (e.g., exhaust gas 26) and reacts with the NOₓ to produce nitrogen (N₂) and water (H₂O). As will be appreciated, the effectiveness of this SCR process may be at least partially dependent on the amount of ammonia (NH₃) injected into the exhaust gas 26. As discussed in detail below, the amount of ammonia (NH₃) injected into the exhaust gas 26 may be regulated along with other operating parameters of the gas turbine engine 12 to maintain emissions levels (e.g., NOₓ emissions levels) below one or more threshold levels in the gas turbine engine 12 (e.g., exhaust gas 26) and the overall turbine system (e.g., stack emissions).

As shown in FIG. 1, the SCR system 30 includes a reductant (e.g., ammonia (NH₃)) injection grid 32 configured to inject the reductant into the stream of exhaust gas 26, as indicated by arrows 34. In one embodiment, the reductant injection grid 32 may include a network of pipes with openings for injecting reductant into the stream of exhaust gas 26. Reductant injection (e.g., arrows 34) occurs upstream of an SCR catalyst 37. As will be appreciated, the reductant and NOₓ in the exhaust gas 26 react as they pass through the SCR catalyst 37 to produce nitrogen (N₂) and water (H₂O), thus removing NOₓ from the exhaust gas 26. The resulting emissions (e.g., processed exhaust gas stream 36 or stack emissions) are released into the atmosphere through a stack 38 of the turbine system 10, as indicated by arrows 40. Furthermore, the stack 36, in some embodiments, may include a silencer or muffler.

As shown, the reductant (e.g., ammonia (NH₃)) may be supplied to the reductant injection grid 32 by a reductant source 42 (e.g., reductant storage tank). Additionally, a valve 44 may control a flow rate of the reductant supplied to the reductant injection grid 32. As discussed in detail below, the flow rate of the reductant may be controlled to achieve a desired NOₓ concentration (e.g., below a threshold level) in the processed exhaust gas stream 36 (e.g., stack emissions). For example, in certain embodiments, the flow rate of the reductant may be based at least partially on the amount of NOₓ in the exhaust gas 26 entering the SCR system 30. Additionally, the flow rate of the reductant may be based at least partially on available NOₓ reduction capacity of the SCR system 30.

While the present embodiment is generally focused on the processing and removal of NOₓ from the exhaust gas stream 26, other embodiments may provide for the removal of other combustion byproducts, such as carbon monoxide or unburned hydrocarbons. As such, the supplied catalyst may vary depending on the composition that is being removed from the exhaust gas stream 26. Additionally, it should be understood that the embodiments disclosed herein are not limited to the use of one SCR system 30, but may also included multiple SCR systems 30.

Still referring to FIG. 1, the turbine system 10 further includes a turbine system control system 46 configured to regulate operation of the gas turbine engine 12 and the exhaust processing system 14. Specifically, the turbine system control system 46 includes an exhaust processing control system 48 and a gas turbine engine control system 50, which may work together to coordinate processing and removal of emissions (e.g., NOₓ, CO, etc.) from the exhaust gas stream 26. For example, in the manner described in detail below, the turbine system control system 46 (e.g., the exhaust processing control system 48 and/or the gas turbine engine control system 50) may regulate one or more operating parameters of the gas turbine engine 12 and/or the SCR system 30 to control the relative amounts of NOₓ reduction in both the exhaust gas 26 and the processed exhaust gas 36. In other words, NOₓ reduction in the SCR system 30 may be increased to enable a reduction in NOₓ emissions control in the gas turbine engine 12.

As shown, the exhaust processing control system 48 includes a controller 52 having a microprocessor 54 and a memory 56. For example, the memory 56 may include any suitable tangible, computer-readable medium having executable instructions. The exhaust processing control system 48 further includes an optimizer 58, which may be configured to control or regulate one or more operating parameters of the turbine system 10 to coordinate (e.g., optimize relative amounts of) NOₓ reduction in the gas turbine engine 12 and the SCR system 30. For example, the optimizer 58 may also include memory 56 with executable instructions for controlling NOₓ reduction in the exhaust gas 26 and processed exhaust gas 36. The exhaust processing control system 48 may regulate one or more components of the SCR system 30. For example, as shown in the illustrated embodiment, the exhaust processing control system 48 may regulate operation of the valve 44. In this manner, the exhaust processing control system 48 may control a flow rate of reductant (e.g., ammonia (NH₃)) into the SCR system 30, thereby adjusting the amount of NOₓ removal from the exhaust gas 26 downstream from the gas turbine engine 12. The exhaust processing system 48 may also regulate operation of other components of the SCR system 30.

Additionally, exhaust processing control system 48 may regulate operation of various components of the SCR system 30 based on measured feedback. For example, the SCR system 30 may include a sensor 60 configured to measure a reductant "slip" in the SCR system 30. As mentioned above, when reductant is over-injected into the exhaust gas 26, an amount of reductant may "slip" or pass through the SCR system 30 unreacted. As such, the sensor 60 may be configured to measure an amount of unreacted reductant in the SCR system 30 and downstream of the reductant injection grid 32. Furthermore, the SCR system 30 may include a sensor 62 that continuously monitors the composition of the processed exhaust stream 36 exiting the stack 38, a sensor 64 configured to measure a flow rate of reductant supplied to the reductant injection grid 32 from the reductant source 42, and a sensor 66 configured to measure NOₓ in the exhaust gas 26. For example, in certain embodiments, the controller 52 and the sensors 62 and 66 may measure emissions parameters using the laser emissions measurement and control system described in U.S. Patent No. 8,151,571. Additionally, in certain embodiments, the sensor 60 and the controller 52 may measure reductant slip using the reductant slip control algorithm described in U.S. Patent Application Publication No. US2011/0192147. In the manner described below, the exhaust processing control system 48 may utilize measured feedback from one or more of the sensors 60, 62, 64, and 66 or other sensors of the SCR system 30 to regulate and coordinate (e.g., optimize relative amounts of) NOₓ eduction in the exhaust gas 26 and the processed exhaust gas 36. Similarly, the optimizer 58 may further regulate operation of the gas turbine engine 12. In certain embodiments, the optimizer 58 may regulate operation of one or more components of the gas turbine engine 12 based on measured feedback from the sensors 60, 62, 64, and 66. For example, a gas turbine controller 68 of the gas turbine engine control system 40 may receive operation instructions or feedback from the optimizer 58 and/or the exhaust processing control system 48. In response, the gas turbine controller 68 may regulate one or more systems 70 of the gas turbine engine 12. For example, the gas turbine controller 68 may control operation of a fuel system 72, which supplies fuel to the combustor 20. Specifically, the gas turbine controller 68 may control the fuel system 72 to regulate fuel flow rates, fuel splits (e.g., split of fuel between 2 or more fuel nozzles and/or combustors), fuel composition, air-fuel ratios (e.g., fuel-rich, fuel-lean, or substantially stoichiometric), or other operating parameters associated with fuel provided to the combustor 20. Additionally, the gas turbine controller 68 may regulate operation of a water system 74 of the gas turbine engine 12. As mentioned above, water or steam may be injected (e.g., from the water system 74) into the combustor 20 to reduce NOₓ in the stream of exhaust gas 26 exiting the turbine 22. However, water (e.g., liquid water or steam) injected into the combustor 20 may increase pressure oscillations and vibrations (e.g., combustion dynamics) in the combustor 20. As a result, in the manner described below, the turbine system control system 46 (e.g., the exhaust processing control system 48 and/or the gas turbine engine control system 50) may be configured to control the amount of water injected into the combustor 20 from the water system 74 in conjunction with controlling other operating parameters of the turbine system 10. Furthermore, the gas turbine controller 68 may regulate or control other operation systems 76 of the gas turbine engine 12 (e.g., based on instructions and/or feedback received from the exhaust processing control system 48 and/or optimizer 58). For example, the other operation systems 76 may include a system configured to regulate a mode of the gas turbine engine 12, a flame temperature of the combustor 20, and so forth.

Moreover, the turbine system control system 46 (e.g., the exhaust processing control system 48 and/or the gas turbine engine control system 50) may be configured to receive user input 78 and control operation of the turbine system 10 and NOₓ levels based on the user input 78. For example, the user input 78 may include reductant price, an exhaust gas NOₓ set point, electricity price, electricity demand, fuel price, combustor outage intervals, NOₓ credits, other financial information, and/or other information related to operation of the turbine system 10. Such user input 78 information may further be incorporated into control of NOₓ reduction in the exhaust gas 26 (e.g., NOₓ control within the gas turbine engine 12) and the processed exhaust gas 36 (e.g., NOₓ control within the exhaust processing system 14). In certain embodiments, further constraints or control parameters may be used by the optimizer 58. For example, additional constraints may include allowable reductant slip based on environmental regulations, stack 38 CO emission regulations, or other operational constraints.

As mentioned above, the optimizer 58 is configured to regulate operation of the turbine system 10 to control NOₓ reduction within the turbine system 10, while increasing hardware and part life of the turbine system 10 (e.g., by reducing combustion dynamics, reducing CO, increasing lean blow out margins, etc.). For example, in one embodiment, variations in NOₓ levels in the exhaust gas 26 may be scheduled (e.g., preset), and the SCR system 30 may be controlled to achieve permitted NOₓ levels in the processed exhaust gas 36 released through the stack 38. In another embodiment, reductant slip (e.g., unreacted reductant) and NOₓ levels in the processed exhaust gas 36 may be simultaneously controlled to achieve a permitted level of NOₓ in the processed exhaust gas 36. In such an embodiment, one or more operating conditions of the gas turbine engine 12 may be controlled to reduce NOₓ control measures within the gas turbine engine 12 causing an increase in the amount of NOₓ in the exhaust gas 26 entering the SCR system 30, thereby utilizing the capacity of the SCR system 30 to reduce NOₓ levels in the exhaust gas 26 to permitted levels. In this manner, water/steam injection and/or other NOₓ reduction measures of the gas turbine engine 12 may be reduced, thereby reducing combustion dynamics and extending combustor 20 life, increasing lean blow out margin and reducing combustor trips and flame out, reducing load turndown, and so forth.

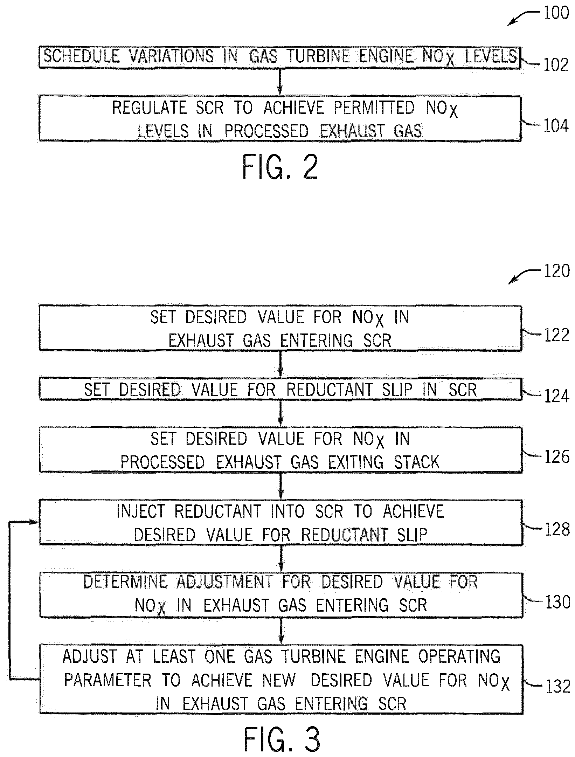

FIG. 2 is a flow chart illustrating a method 100 for controlling emissions of the turbine system 10 using the turbine system control system 46. As indicated by step 102, variations in gas turbine engine 12 NOₓ levels (e.g., levels of NOₓ in exhaust gas 26 exiting the gas turbine engine 12) may be scheduled. For example, NOₓ levels in the exhaust gas 26 exiting the gas turbine engine 12 may vary based on scheduled loads, operating modes (e.g., start up, steady state, shut down, part load, turn down, etc.), or operating times of the gas turbine engine 12. In one embodiment, a first level of NOₓ emissions may be permitted or output of the gas turbine engine 12 for a first period of a time, and, subsequently, a second level of NOₓ emissions may be permitted or output from the gas turbine engine 12 for a second period of time. During the first and second periods of time, the SCR system 30 may be controlled to further reduce NOₓ emissions in the exhaust gas 26 to a permitted level of the processed exhaust gas 36. In certain embodiments, the NOₓ levels in the exhaust gas 26 exiting the gas turbine engine 12 and entering the SCR system 30 may be scheduled or preset in the turbine system control system 46 as user input 78. As will be appreciated, the gas turbine engine controls system 50 may be configured to control one or more operating systems 70 (e.g., fuel system 72, water system 74, or other system 76) to achieve the scheduled or preset NOₓ levels in the exhaust gas 26. In certain embodiments, the sensor 66 may measure NOₓ levels in the exhaust gas 26 exiting the gas turbine engine 12, and the turbine system control system 48 may communicate the feedback or instructions to the gas turbine controller 68 to regulate one or more of the operating systems 70 to achieve the scheduled NOₓ levels.

With the NOₓ levels of the exhaust gas 26 exiting the gas turbine engine 12 scheduled or preset, the SCR system 30 may be operated or controlled (e.g., by the exhaust processing control system 48) to achieve permitted levels of NOₓ in the processed exhaust gas 36 exiting the stack 38, as indicated by step 104. For example, based on the NOₓ levels in the exhaust gas 26 entering the SCR system 30, the exhaust processing control system 48 may regulate operation of the valve 44 to control an amount of reductant (e.g., ammonia) entering the SCR system 30 through the reductant injection grid 32. Specifically, the amount of reductant injected into the SCR system 30 may be controlled to achieve a permitted NOₓ level of the processed exhaust gas 36. For example, the exhaust processing control system 48 may receive a measured amount of NOₓ in the processed exhaust gas 36 from the sensor 62, and the controller 52 may regulate operation of the valve 44 to inject a sufficient amount of reductant into the SCR system 30 to reduce NOₓ levels in the processed exhaust gas 36 to a permitted level.

FIG. 3 is a flow chart illustrating a method 120 for controlling emissions of the turbine system 10 using the turbine system control system 46. For example, the illustrated method 120 may be used for increasing (e.g., maximizing) the amount of NOₓ in the exhaust gases 26 exiting the gas turbine engine 12 and entering the SCR system 30, while achieving permitted NOₓ levels in the processed exhaust gases 36 exiting the turbine system 10 through the stack 38. First, as indicated by step 122, a desired or target value for NOₓ in the exhaust gas 26 exiting the gas turbine engine 12 and entering the SCR system 30 may be set. For example, the desired or target value for NOₓ levels in the exhaust gas 26 exiting the gas turbine engine 12 and entering the SCR system 30 may be set in the optimizer 58 through user input 78. Thereafter, a desired or target value for reductant slip in the SCR system 30 may be set, as indicated by step 124. For example, the desired or target value for reductant slip in the SCR system 30 may be set in the optimizer 58 through user input 78. In certain embodiments, the desired or target value for reductant slip in the SCR system 30 may be based on an allowable or permitted amount based on certain regulations (e.g., environmental regulations). Next, a desired or target value for NOₓ levels in the processed exhaust gas 36 exiting the stack 38 of the exhaust processing system 14 may be set, as indicated in step 126. As similarly described above, the desired or target value for NOₓ in the processed exhaust gas 36 may be set in the optimizer 58 through user input 78. Additionally, the desired or target value for NOₓ in the processed exhaust gas 36 may be based on an allowable or permitted amount based on certain regulations (e.g., environmental regulations).

Once the above mentioned values are set (e.g., by user input 78, preprogrammed, or otherwise), reductant may be injected into the SCR system 30 to achieve the desired reductant slip value, as indicated by step 128. For example, the controller 52 of the exhaust processing control system 48 may regulate operation of the valve 44 to control flow of reductant from the reductant source 42 to the reductant injection grid 32 of the SCR system 30. Additionally, the exhaust processing control system 48 may receive a feedback of measured reductant slip (e.g., unreacted reductant) from the sensor 60. Using the measured feedback from the sensor 60, the controller 52 may further regulate the flow of reductant into the SCR system 30 (e.g., by controlling operation of the valve 44) to achieve the desired value for reductant slip. Furthermore, in certain embodiments, reductant slip may be controlled using one or more algorithms, which may be stored in the memory 56 of the exhaust processing control system 48. For example, in one embodiment, the algorithm may be the reductant slip control algorithm described in U.S. Patent Application Publication No. US2011/0192147. Thereafter, an adjustment for the desired value of NOₓ in the exhaust gas 26 entering the SCR system 30 may be determined, as indicated by step 130. For example, based at least partially on measured feedback received by the sensors 60 and/or 62, the desired value of NOₓ in the exhaust gas 26 exiting the gas turbine engine 12 and entering the SCR system 30 may increase or decrease. Accordingly, the optimizer 58 may calculate an appropriate adjustment. For example, if the optimizer 58 calculates that the SCR system 30 has additional unused capacity (e.g., based on a measured reductant slip determined by the sensor 60), then the optimizer 58 may determine that the desired value of NOₓ in the exhaust gas 26 entering the SCR system 30 should increase.

After the adjustment for the desired value of NOₓ in the exhaust gas 26 entering the SCR system 30 is determined, the turbine system control system 46 (e.g., optimizer 58) may determine an adjustment of at least one gas turbine engine 12 operating parameter to achieve the new desired value for NOₓ in the exhaust gas 26 entering the SCR system 30, as indicated by step 132. For example, if the optimizer 58 determines that the desired value for NOₓ in the exhaust gas 26 entering the SCR system 30 should increase, the gas turbine controller 68 may operate the water system 74 of the gas turbine engine 12 to decrease water/steam injection into the combustor 20. As a result, combustion dynamics in the combustor 20 may be reduced due to the reduced water/steam injection, thereby reducing wear on combustor 20 components and increasing the useful life of the combustor 20. Other gas turbine engine 12 operating parameters that may be altered by the gas turbine controller 68 based on the adjustment determined by the optimizer 58 may include adjustments to fuel splits (e.g., adjusting one or more fuel flows to one or more fuel nozzles and/or combustors), flame temperature, fuel/air ratio (or equivalence ratio), fuel composition, and so forth.

After the adjustment is made to one or more operating parameters of the gas turbine engine 12 to achieve the new desired value for NOₓ in the exhaust gas 26 entering the SCR system 30, the turbine system control system 46 (e.g., the optimizer 58) may again sequentially perform steps 128, 130, and 132 in a loop (e.g., a continuous loop). That is, reductant may be injected into the SCR system 30 to achieve the desired reductant slip value measured by sensor 30, an adjustment for the desired value for NOₓ in the exhaust gas 26 entering the SCR system 30 may be determined, and one or more operating parameter adjustments may be determined and implemented for the gas turbine engine 12. In this manner, the operation of the gas turbine engine 12 and the SCR system 30 may be coordinated (e.g., simultaneously coordinated and controlled) to utilize available capacity of the SCR system 30 during less than full or base loads of the gas turbine engine 12, reduce combustion dynamics in the combustor 20, reduce CO emissions (e.g., by increasing NOₓ emissions in the gas turbine engine 12 upstream of the SCR system 30, increase lean blow out margin, reduce turndown load, and so forth.

As discussed in detail above, the turbine system 10, which may be a simple cycle heavy-duty gas turbine system or an aircraft engine derivative combustion system, includes the turbine system control system 46 configured to regulate and coordinate operation of the gas turbine engine 12 and the SCR system 30 to achieve a desired quality of emissions (e.g., stack emissions) produced by the turbine system 10. For instance, the control system 46 may be configured to utilize available NOₓ reduction capacity of the SCR system 30 to reduce NOₓ emission levels, such that other emissions control measures may be reduced to improve performance, efficiency, longevity, and/or power output of the gas turbine engine 12. Specifically, when the gas turbine engine 12 is not operating at a full or base load and the SCR system 30 has unused NOₓ reduction capacity, operating parameters of the gas turbine engine 12 may be adjusted to potentially increase NOₓ levels in the exhaust gases 26 produced by the gas turbine engine 12 while reducing mechanical and thermal fatigue to combustor hardware, increasing lean blow out margins, reducing turndown load, reducing other emissions compounds (e.g., CO), and so forth. For example, the variations in NOₓ levels in the exhaust gas 26 produced by the gas turbine engine 12 and entering the SCR system 30 may be preset or scheduled. That is, NOₓ levels in the exhaust gas 26 may be produced at a first level for a first period of time and at a second level for a second period of time, and the SCR system 30 may further reduce NOₓ levels in the processed exhaust gas 36 accordingly. Additionally, operation of the SCR system 30 and the gas turbine engine 12 may be simultaneously controlled and coordinated to utilize available NOₓ reduction capacity of the SCR system 30.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (10), comprising:
a gas turbine engine (12); an exhaust processing system (14) a selective catalytic reduction system (30); and
a control system (46, 48) configured to:
receive a desired value for NOₓ levels in an exhaust gas (26) exiting the gas turbine engine (12) and entering the SCR system (30), a desired value for reductant slip in the SCR system (30) and a desired value for NOₓ levels in the processed exhaust gas (36) exiting the exhaust processing system (14);
(a) control a flow of reductant into the SCR system (30) to achieve the desired reductant slip value;
(b) determine whether an adjustment of the desired NOₓ value in the exhaust gas (26) entering the SCR system (30) is required based on measured values of the reductant slip in the SCR system (30) and measured values of the composition of the processed exhaust stream (36) exiting the exhaust processing system (14), and if so, to calculate the adjustment;
(c) determine an adjustment of at least one operating parameter of the gas turbine engine (12) to achieve the new desired value of NOₓ in the exhaust gas (26) entering the SCR system (30);
(d) control operation of the gas turbine engine (12) based on the adjusted at least one operating parameter to achieve the desired value of NOₓ in the exhaust gas (26) entering the SCR system (30); and
(e) sequentially perform steps (a) (b), (c) and (d) in a loop

2. The system of claim 1, wherein the at least one operating parameter of the gas turbine engine (12) comprises a fuel split of a combustor (20) of the gas turbine engine (12), a water injection into the combustor (20), a flame temperature of the combustor (20), an air-fuel ratio of the combustor (20), or a combination thereof.

3. A method (100) of operating a turbine system, the turbine system comprising a gas turbine engine (12), an exhaust processing system (14), a selective catalytic reduction system (30) and a control system (46, 48) configured to regulate operation of the selective catalytic reduction system (30) and the gas turbine (12), the method comprising:
(a) setting (122) a desired value for NOₓ levels in an exhaust gas (26) exiting the gas turbine engine (12) and entering the SCR system (30);
(b) setting (124) a desired value for reductant slip in the SCR system (30);
(c) setting (126) a desired value for NOₓ levels in the processed exhaust gas (36) exiting the exhaust processing system (14);
(d) controlling (128) a flow of reductant into the SCR system (30) to achieve the desired reductant slip value;
(e) determining (130) whether an adjustment of the desired NOₓ value in the exhaust gas (26) entering the SCR system (30) is required based on measured values of the reductant slip in the SCR system (30) and measured values of the composition of the processed exhaust stream (36) exiting the exhaust processing system (14), and if so, calculating the adjustment;
(f) determining (132) an adjustment of at least one operating parameter of the gas turbine engine (12) to achieve the new desired value of NOₓ in the exhaust gas (26) entering the SCR system (30);
(g) controlling operation of the gas turbine engine (12) based on the adjusted at least one operating parameter to achieve the desired value of NOₓ in the exhaust gas (26) entering the SCR system (30); and
(h) sequentially performing steps (d) (e), (f) and (g) in a loop

4. The method of claim 3, wherein controlling operation of the gas turbine engine (12) to achieve the desired value of NOₓ in the exhaust gas (26) entering the SCR system (30) comprises:
reducing a water or steam injection into a combustor of the gas turbine engine (12); and/or
regulating combustion fuel splits of a combustor of the gas turbine engine (12).

## Patentansprüche

1. Anlage (10), umfassend:
einen Gasturbinenmotor (12);
eine Abgasbehandlungsanlage (14);
eine Anlage (30) zur selektiven katalytischen Reduktion; und
eine Steuerung (46, 48), ausgelegt zum:
Empfangen eines Sollwerts für NOₓ-Werte in einem Abgas (26), das aus dem Gasturbinenmotor (12) austritt und in die SCR-Anlage (30) eintritt, eines Sollwerts für Reduktionsmittelschlupf in der SCR-Anlage (30) und eines Sollwerts für NOx-Werte in dem behandelten Abgas (36), das aus der Abgasbehandlungsanlage (14) austritt;
(a) Steuern eines Reduktionsmittelflusses in die SCR-Anlage (30) zum Erreichen des Sollwerts für Reduktionsmittelschlupf;
(b) Bestimmen, ob eine Anpassung des NOx-Sollwerts in dem Abgas (26), das in die SCR-Anlage (30) eintritt, erforderlich ist, anhand von Messwerten des Reduktionsmittelschlupfes in der SCR-Anlage (30) und Messwerten der Zusammensetzung des behandelten Abgasstroms (36), der aus der Abgasbehandlungsanlage (14) austritt, und falls ja, Berechnen der Anpassung;
(c) Bestimmen einer Anpassung zumindest eines Betriebsparameters des Gasturbinenmotors (12) zum Erreichen des neuen NOₓ-Sollwerts in dem Abgas (26), das in die SCR-Anlage (30) eintritt;
(d) Steuern des Betriebs des Gasturbinenmotors (12) anhand des angepassten zumindest einen Betriebsparameters zum Erreichen des NOx-Sollwerts in dem Abgas (26), das in die SCR-Anlage (30) eintritt; und
(e) sequentielles Ausführen der Schritte (a), (b), (c) und (d) in einer Schleife.

2. Anlage nach Anspruch 1, wobei der zumindest eine Betriebsparameter des Gasturbinenmotors (12) eine Brennstoffaufteilung einer Brennkammer (20) des Gasturbinenmotors (12), eine Wassereinspritzung in die Brennkammer (20), eine Flammentemperatur der Brennkammer (20), ein Luft-Brennstoff-Verhältnis der Brennkammer (20) oder eine Kombination davon umfasst.

3. Verfahren (100) zum Betreiben einer Turbinenanlage, wobei die Turbinenanlage einen Gasturbinenmotor (12), eine Abgasbehandlungsanlage (14), eine Anlage (30) zur selektiven katalytischen Reduktion und eine Steuerung (46, 48), die zur Betriebssteuerung der Anlage (30) zur selektiven katalytischen Reduktion und der Gasturbine (12) ausgelegt ist, umfasst, wobei das Verfahren Folgendes umfasst:
(a) Festlegen (122) eines Sollwerts für NOₓ-Werte in einem Abgas (26), das aus der Gasturbine (12) austritt und in die SCR-Anlage (30) eintritt;
(b) Festlegen (124) eines Sollwerts für Reduktionsmittelschlupf in der SCR-Anlage (30);
(c) Festlegen (126) eines Sollwerts für NOx-Werte in dem behandelten Abgas (36), das aus der Abgasbehandlungsanlage (14) austritt;
(d) Steuern (128) eines Reduktionsmittelflusses in die SCR-Anlage (30) zum Erreichen des Sollwerts für Reduktionsmittelschlupf;
(e) Bestimmen (130), ob eine Anpassung des NOₓ-Sollwerts in dem Abgas (26), das in die SCR-Anlage (30) eintritt, erforderlich ist, anhand von Messwerten des Reduktionsmittelschlupfes in der SCR-Anlage (30) und Messwerten der Zusammensetzung des behandelten Abgasstroms (36), der aus der Abgasbehandlungsanlage (14) austritt, und falls ja, Berechnen der Anpassung;
(f) Bestimmen (132) einer Anpassung zumindest eines Betriebsparameters des Gasturbinenmotors (12) zum Erreichen des neuen NOₓ-Sollwerts in dem Abgas (26), das in die SCR-Anlage (30) eintritt;
(g) Steuern des Betriebs des Gasturbinenmotors (12) anhand des angepassten zumindest einen Betriebsparameters zum Erreichen des NOx-Sollwerts in dem Abgas (26), das in die SCR-Anlage (30) eintritt; und
(h) sequentielles Ausführen der Schritte (d), (e), (f) und (g) in einer Schleife.

4. Verfahren nach Anspruch 3, wobei Steuern des Betriebs des Gasturbinenmotors (12) zum Erreichen des NOx-Sollwerts in dem Abgas (26), das in die SCR-Anlage (30) eintritt, Folgendes umfasst:
Reduzieren einer Wasser- oder Dampfeinspritzung in eine Brennkammer des Gasturbinenmotors (12); und/oder
Regeln von Brennstoffaufteilungen einer Brennkammer des Gasturbinenmotors (12).

## Revendications

1. Système (10), comprenant:
un moteur à turbine à gaz (12);
un système de traitement d'échappement (14);
un système de réduction catalytique sélective (30); et
un système de commande (46, 48) configuré de manière à recevoir une valeur souhaitée de niveaux de NOₓ dans un gaz d'échappement (26) qui sort du moteur à turbine à gaz (12) et qui entre dans le système SCR (30), une valeur souhaitée de perte de réducteur dans le système SCR (30) et une valeur souhaitée de niveaux de NOₓ dans le gaz d'échappement traité (36) sortant du système de traitement d'échappement (14);
(a) commander un écoulement de réducteur dans le système SCR (30) pour atteindre la valeur de perte de réducteur souhaitée;
(b) déterminer si un ajustement de la valeur de NOₓ souhaitée dans le gaz d'échappement (26) qui entre dans le système SCR (30) est requis sur la base de valeurs mesurées de la perte de réducteur dans le système SCR (30) et de valeurs mesurées de la composition du courant d'échappement traité (36) qui sort du système de traitement d'échappement (14), et si c'est le cas, calculer l'ajustement;
(c) déterminer un ajustement d'au moins un paramètre de fonctionnement du moteur à turbine à gaz (12) afin d'obtenir la nouvelle valeur souhaitée de NOₓ dans le gaz d'échappement (26) qui entre dans le système SCR (30);
(d) commander le fonctionnement du moteur à turbine à gaz (12) sur la base dudit au moins un paramètre de fonctionnement ajusté afin d'obtenir la valeur souhaitée de NOₓ dans le gaz d'échappement (26) qui entre dans le système SCR (30); et
(e) exécuter de façon séquentielle les étapes (a), (b), (c) et (d) en boucle.

2. Système selon la revendication 1, dans lequel ledit au moins un paramètre de fonctionnement du moteur à turbine à gaz (12) comprend un fractionnement de combustible d'une chambre de combustion (20) du moteur à turbine à gaz (12), une injection d'eau dans la chambre de combustion (20), une température de flamme de la chambre de combustion (20), un rapport air-combustible de la chambre de combustion (20) ou une combinaison de ceux-ci.

3. Procédé (100) de fonctionnement d'un système de turbine, le système de turbine comprenant un moteur à turbine à gaz (12), un système de traitement d'échappement (14), un système de réduction catalytique sélective (30) et un système de commande (46, 48) configuré de manière à réguler le fonctionnement du système de réduction catalytique sélective (30) et du moteur à turbine à gaz (12), le procédé comprenant les étapes suivantes:
(a) déterminer (122) une valeur souhaitée de niveaux de NOₓ dans un gaz d'échappement (26) qui sort du moteur à turbine à gaz (12) et qui entre dans le système SCR (30);
(b) déterminer (124) une valeur souhaitée de perte de réducteur dans le système SCR (30);
(c) déterminer (126) une valeur souhaitée de niveaux de NOₓ dans le gaz d'échappement traité (36) qui sort du système de traitement d'échappement (14);
(d) commander (128) un écoulement de réducteur dans le système SCR (30) pour atteindre la valeur de perte de réducteur souhaitée;
(e) déterminer (130) si un ajustement de la valeur de NOₓ souhaitée dans le gaz d'échappement (26) qui entre dans le système SCR (30) est requis sur la base de valeurs mesurées de la perte de réducteur dans le système SCR (30) et de valeurs mesurées de la composition du courant d'échappement traité (36) qui sort du système de traitement d'échappement (14), et si c'est le cas, calculer l'ajustement;
(f) déterminer (132) un ajustement d'au moins un paramètre de fonctionnement du moteur à turbine à gaz (12) pour atteindre la nouvelle valeur souhaitée de NOₓ dans le gaz d'échappement (26) qui entre dans le système SCR (30);
(g) commander le fonctionnement du moteur à turbine à gaz (12) sur la base dudit au moins un paramètre de fonctionnement ajusté afin d'obtenir la valeur souhaitée de NOₓ dans le gaz d'échappement (26) qui entre dans le système SCR (30); et
(h) exécuter de façon séquentielle les étapes (d), (e), (f) et (g) en boucle.

4. Procédé selon la revendication 3, dans lequel la commande du fonctionnement du moteur à turbine à gaz (12) pour parvenir à la valeur souhaitée de NOₓ dans le gaz d'échappement (26) qui entre dans le système SCR (30) comprend les étapes suivantes:
réduire une injection d'eau ou de vapeur dans une chambre de combustion du moteur à turbine à gaz (12); et/ou
réguler les fractionnements de combustible de combustion d'une chambre de combustion du moteur à turbine à gaz (12).
